# EUROPEAN PATENT SPECIFICATION

(11) **EP 3 951 603 B1**
(45) Date of publication and mention of the grant of the patent: **09.10.2024**
(21) Application number: 20779123.7
(22) Date of filing: 20.02.2020
(51) Int. Cl.: H04L 67/52, G06F 13/00, H04L 67/50, H04L 67/54, H04L 67/55, H04L 67/30, H04W 4/02

(54) **INFORMATION NOTIFICATION SYSTEM AND INFORMATION NOTIFICATION METHOD**
SYSTEM UND VERFAHREN ZUR INFORMATIONSMITTEILUNG
SYSTÈME ET PROCÉDÉ DE NOTIFICATION D'INFORMATIONS

(30) Priority: 26.03.2019 JP 2019059358
(43) Date of publication of application: 09.02.2022
(73) Proprietor: Panasonic Intellectual Property Management Co., Ltd., Osaka-shi, Osaka 540-6207 (JP)
(72) Inventor: YAMAMOTO, Kohsuke, Osaka-shi, Osaka 540-6207 (JP); OHHO, Masahiro, Osaka-shi, Osaka 540-6207 (JP); TAKAHASHI, Seigo, Osaka-shi, Osaka 540-6207 (JP); URABE, Hiroki, Osaka-shi, Osaka 540-6207 (JP)
(74) Representative: Grünecker Patent- und Rechtsanwälte PartG mbB
(86) International application number: PCT/JP2020/006666
(87) International publication number: WO 2020/195388

(56) References cited:
- WO-A1-2015/133022
- JP-A- 2015 088 086
- JP-A- 2016 076 799
- JP-A- 2016 178 701
- US-A1- 2015 288 745
- US-A1- 2016 048 298
- US-A1- 2018 206 083

## Description

### [Technical Field]

The present disclosure relates to an information notification system and an information notification method.

### [Background Art]

Internet of Things (IOT) is gaining popularity, in which various types of equipment such as home appliances are connected to the Internet and control one another. By taking advantage of IoT, users become able to receive notification from equipment such as home appliances via other equipment. According to the invention described in Patent Literature (PTL) 1, for example, information that is output from a home appliance is notified to a user via other information notification equipment or the like. This enables the user who is away from the home appliance to obtain the information output from the home appliance without carrying a mobile terminal capable of receiving information from home appliances.
US 2018/206083 A1 relates to user location aware smart event handling for providing notification messages to a user. An example method of sending an alert message according to the disclosure includes receiving a notification message for a user, determining a location of the user, determining one or more notification devices based the location of the user, generating the alert message based on one or more notification preferences associated with the user and the one or more notification devices, and sending the alert message to at least one of the one or more notification devices based on the notification preferences.
US 2015/288745 A1 relates to systems and methods for adaptive notification networks, which can receive a notification from at least one of a plurality of notification nodes. The notification can be associated with a target user. Information related to the target user can be acquired. Information related to the plurality of notification nodes can be acquired. The notification can be formatted based on at least one of the information related to the target user or information related to the one or more selected notification nodes. The formatted notification can then be transmitted to the one or more selected notification nodes.

### [Citation List]

### [Patent Literature]

PTL 1: Japanese Unexamined Patent Application Publication No. 2017-204733

### [Summary of Invention]

### [Technical Problem]

However, according to the invention described in PTL 1, whether any person is present is sensed, and information notification equipment provides notification when the presence of a person has been sensed. Thus, for example when there are a plurality of persons, notification is also provided to persons other than a user. Accordingly, for example when notification is provided by sounds, persons other than a user may feel annoyed by the notification.

In view of this, the present disclosure provides an information notification system and the like that are capable of presenting notification information received from one apparatus to the user of the apparatus via another apparatus, and reducing the possibility that such information may be presented to persons other than the user.

### [Solution to Problem]

An information notification system according to one aspect of the present invention is an information notification system according to independent claim 1. Further embodiments of the system are provided in dependent claims 2-9.

An information notification method according to another aspect of the present invention is an information notification method according to independent claim 10.

Note that these comprehensive or specific aspects may be implemented as methods, integrated circuits, computer programs, or computer-readable recording media such as CD-ROMs, in addition to the above-described method or system, or may be implemented as any combination of systems, methods, integrated circuits, computer programs, and recording media.

### [Advantageous Effects of Invention]

The information notification system and the like according to the present disclosure are capable of presenting notification information output from one apparatus to a user of the apparatus via another apparatus, and reducing the possibility that such information may be presented to persons other than the user.

### [Brief Description of Drawings]

[FIG. 1]

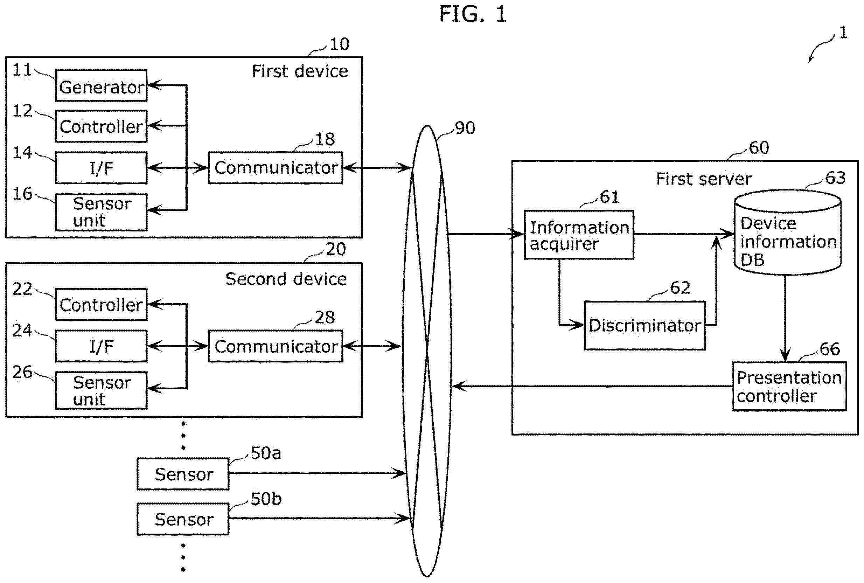

   FIG. 1 is a block diagram illustrating a functional configuration of an information notification system according to Embodiment 1.
[FIG. 2]

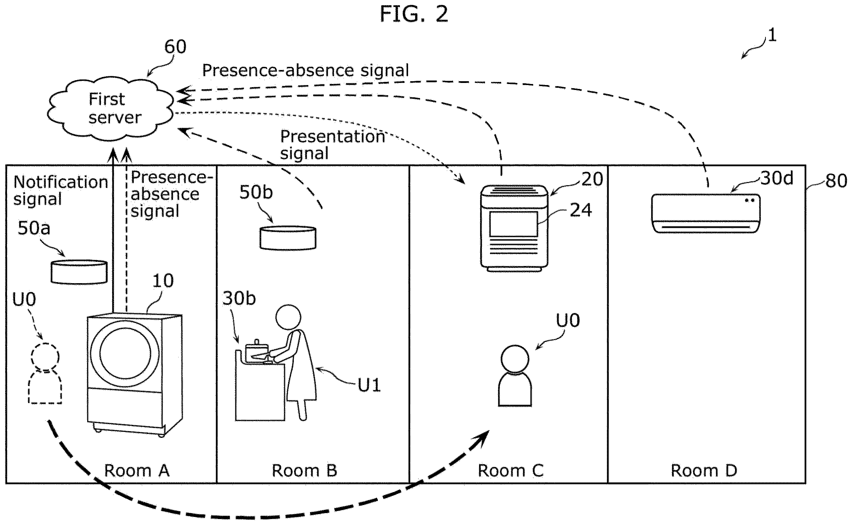

   FIG. 2 is a schematic diagram illustrating an exemplary configuration of the information notification system according to Embodiment 1 and an exemplary operation thereof.
[FIG. 3]

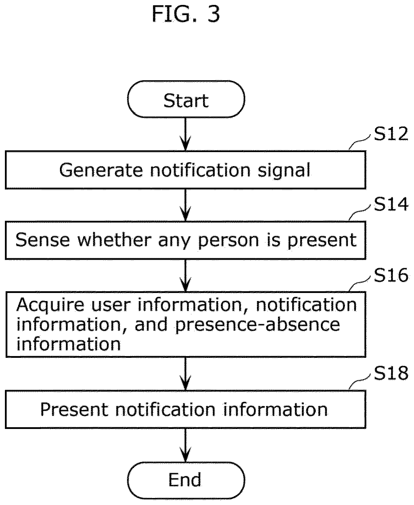

   FIG. 3 is a flowchart of an information notification method according to Embodiment 1.
[FIG. 4]

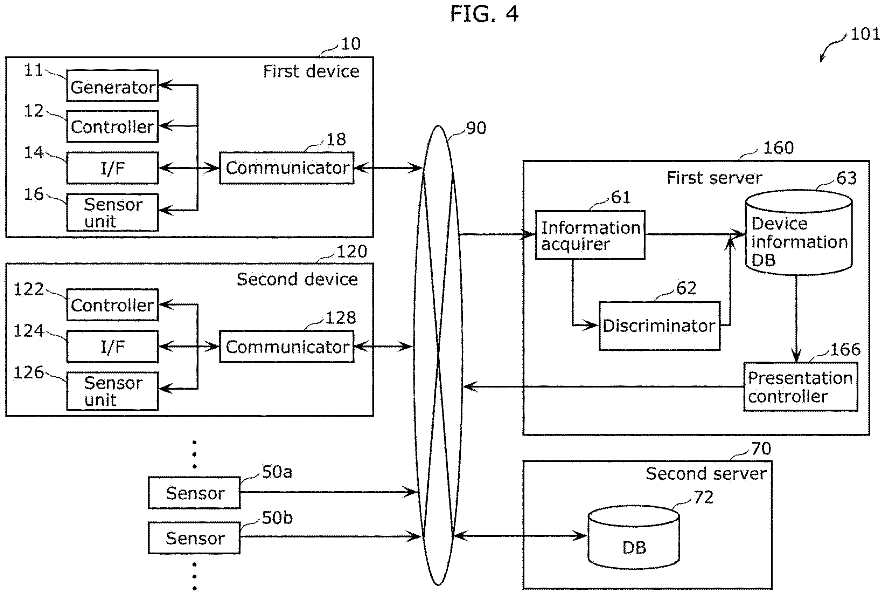

   FIG. 4 is a block diagram illustrating a functional configuration of an information notification system according to Embodiment 2.
[FIG. 5]

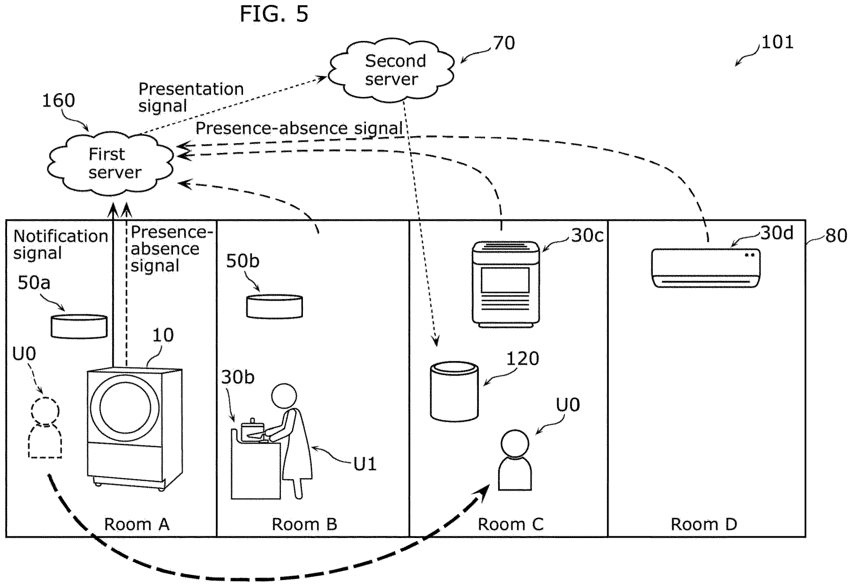

   FIG. 5 is a schematic diagram illustrating an exemplary configuration of the information notification system according to Embodiment 2 and an exemplary operation thereof.
[FIG. 6]

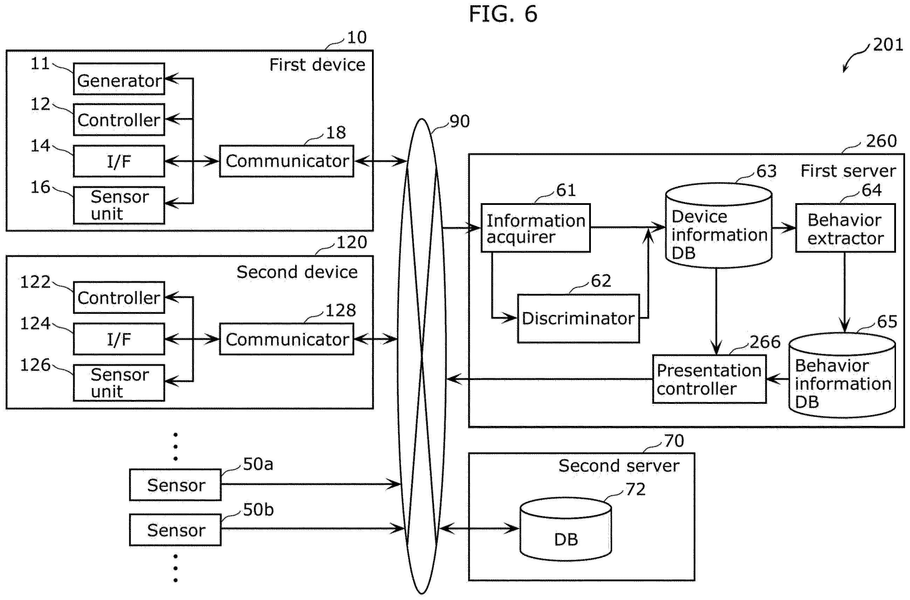

   FIG. 6 is a block diagram illustrating a functional configuration of an information notification system according to Embodiment 3.
[FIG. 7]

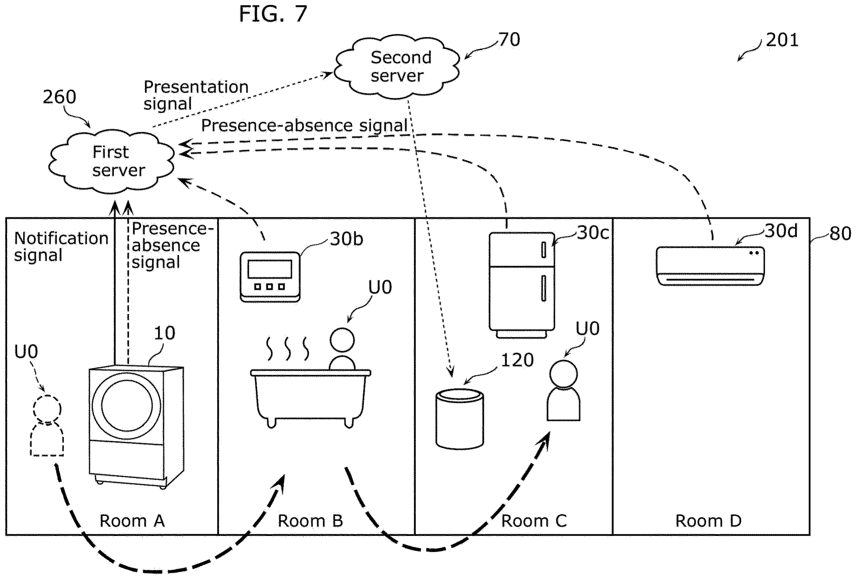

   FIG. 7 is a schematic diagram illustrating an exemplary configuration of the information notification system according to Embodiment 3 and an exemplary operation thereof.
[FIG. 8]

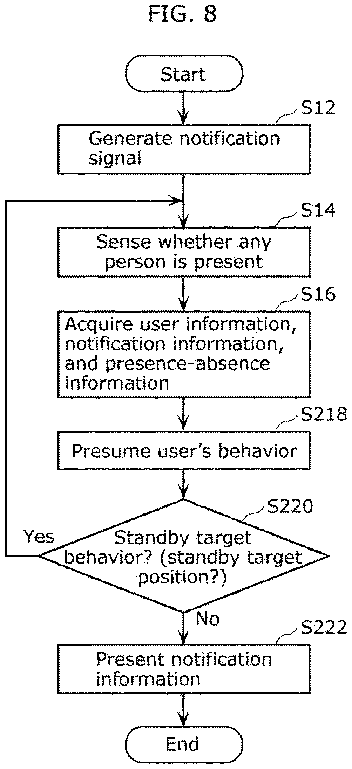

   FIG. 8 is a flowchart of an information notification method according to Embodiment 3.
[FIG. 9]

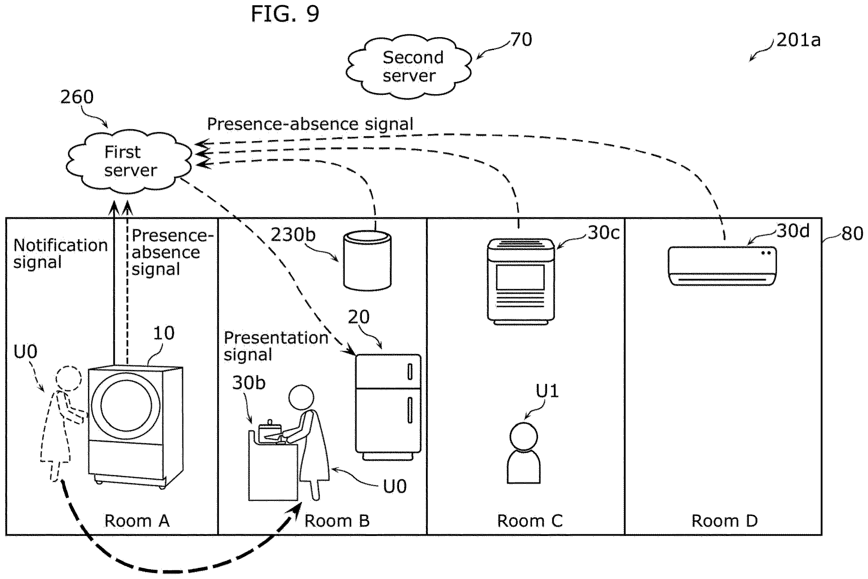

   FIG. 9 is a schematic diagram illustrating an exemplary configuration of an information notification system according to a variation of Embodiment 3 and an exemplary operation thereof.
[FIG. 10]

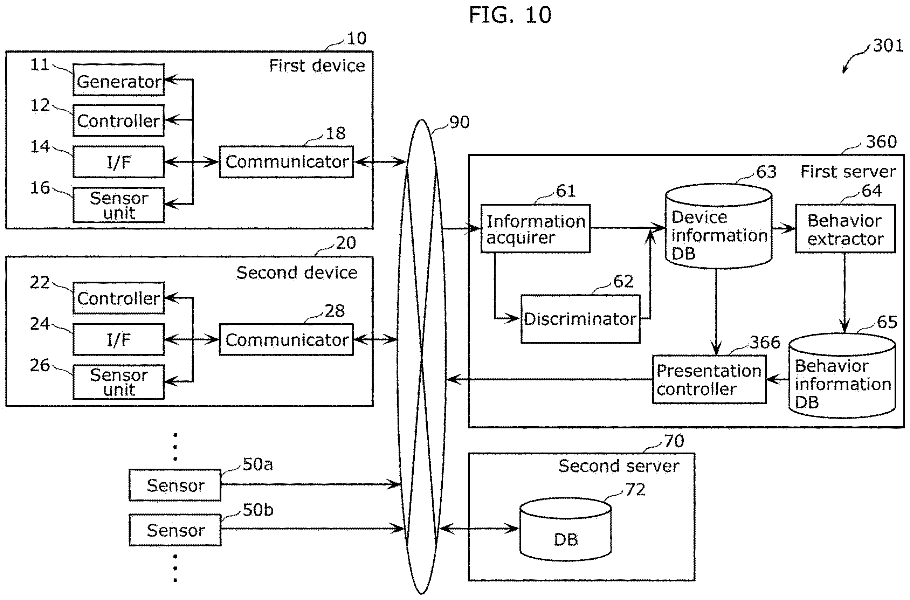

   FIG. 10 is a block diagram illustrating a functional configuration of an information notification system according to Embodiment 4.
[FIG. 11]

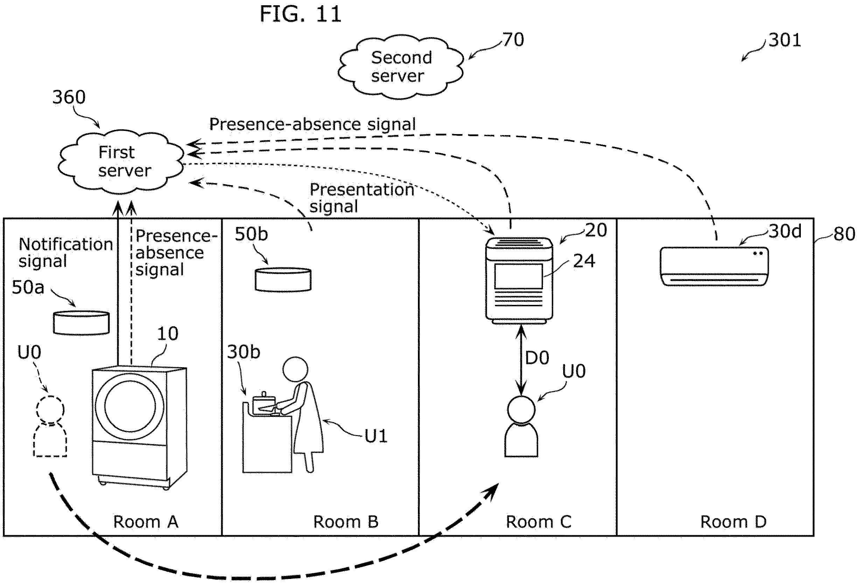

   FIG. 11 is a schematic diagram illustrating an exemplary configuration of the information notification system according to Embodiment 4 and an exemplary operation thereof.
[FIG. 12A]

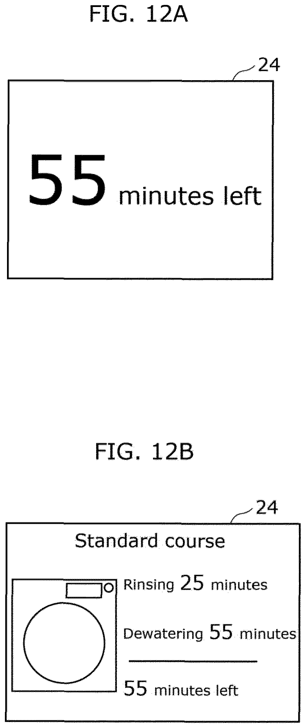

   FIG. 12A is a diagram illustrating one example of a notification image displayed on an interface of a second device according to Embodiment 4.
[FIG. 12B]
   FIG. 12B is a diagram illustrating another example of the notification image displayed on the interface of the second device according to Embodiment 4.
[FIG. 13]

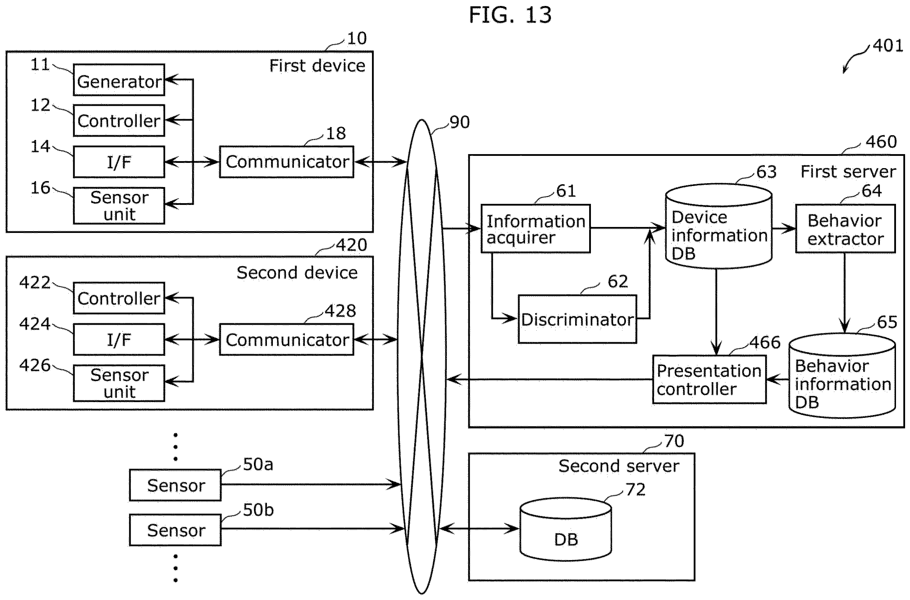

   FIG. 13 is a block diagram illustrating a functional configuration of an information notification system according to Embodiment 5.
[FIG. 14]

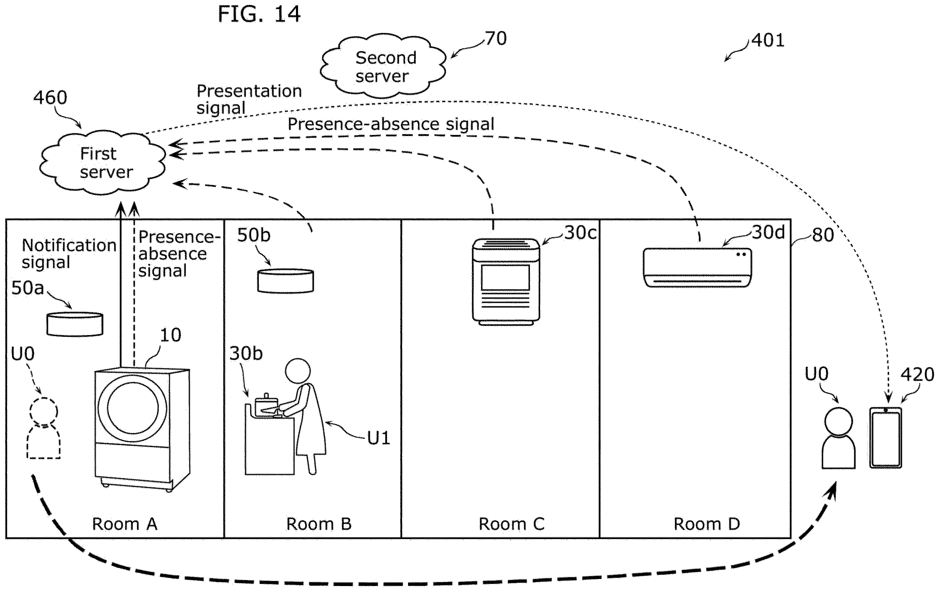

   FIG. 14 is a schematic diagram illustrating an exemplary configuration of the information notification system according to Embodiment 5 and an exemplary operation thereof.

### [Description of Embodiments]

Hereinafter, embodiments will be described in detail with reference to the drawings.

Each embodiment described below illustrates one generic or specific example of the present disclosure. Numerical values, shapes, materials, constituent elements, positions of constituent elements in arrangements, forms of connection of constituent elements, steps, sequences of steps, and so on in the following embodiments are merely one example, and do not intend to limit the scope of the present disclosure. Among constituent elements described in the following embodiments, those that are not recited in any independent claim, which represents the broadest concept of the present disclosure, are described as optional constituent elements.

Each drawing is in schematic form and does not necessarily provide precise depiction. The same structural elements are given the same reference signs throughout the drawings.

### [Embodiment 1]

An information notification system and an information notification method according to Embodiment 1 will be described.

### [1-1. Configuration]

First, a configuration of the information notification system according to Embodiment 1 will be described with reference to FIG. 1. FIG. 1 is a block diagram illustrating a functional configuration of information notification system 1 according to the present embodiment.

Information notification system 1 according to the present embodiment is a system capable of presenting notification information output from each of a plurality of apparatuses including home appliances to a user not only from the apparatus but also via another apparatus. Information notification system 1 includes a plurality of apparatuses and one or more servers. The plurality of apparatuses and the one or more servers carry out communications via network 90. There are no particular limitations on network 90, as long as it is possible to form a communication network that connects the plurality of apparatuses and the one or more servers. Network 90 is a wired or wireless communication network. For example, the network may be a wired network compliant with standards such as Ethernet (registered trademark), or may be a wireless network compliant with standards such as Wi-Fi (registered trademark), Bluetooth (registered trademark), or ZigBee (registered trademark).

The one or more servers are devices that cause the apparatus located near the position of a user among the plurality of apparatuses to provide notification information to the user. The one or more servers include first server 60.

The plurality of apparatuses are devices located in a predetermined space such as a house. Examples of the plurality of apparatuses include home appliances such as a washing machine, a TV receiver, a microwave oven, a refrigerator, an air conditioner, and an air cleaner. Each of at least one of the plurality of apparatuses includes a sensor unit that discriminates between one or more persons and generates a presence-absence signal including presence-absence information about each of the one or more persons. For example, the plurality of apparatuses may include a sensor such as a human sensing sensor. In the present embodiment, the plurality of apparatuses include first device 10 and second device 20 as illustrated in FIG. 1. The plurality of apparatuses further include sensors 50a and 50b.

First device 10 is one exemplary apparatus that is used by a user and that generates notification information that is to be provided to the user. First device 10 is the apparatus used by the user among the plurality of apparatuses, and which apparatus is to be identified as first device 10 is not determined until the user uses the apparatus. Thus, first device 10 is the apparatus temporarily identified based on the behavior of the user.

In present embodiment, first device 10 includes generator 11, interface 14, and communicator 18 as illustrated in FIG. 1. In FIG. 1 and other drawings, the interface is expressed as "I/F". In the present embodiment, first device 10 further includes controller 12 and sensor unit 16.

Generator 11 generates a notification signal including notification information that is to be provided to the user who uses first device 10 and user information for use in identifying the user. The notification information includes, for example, information that indicates operation details and operation conditions of first device 10. In the case where first device 10 is a washing machine, the notification information includes, for example, information indicating operation details such as "washing" and "rinsing" and operation conditions such as the remaining time until the completion of laundry. The user information refers to information for use in identifying the person who has used first device 10. For example, the user information may be information identified based on a signal input to interface 14 by the user. The user information may also be information about the user, acquired by sensor unit 16 of first device 10. For example, in the case where sensor unit 16 includes an image capturing device or the like, the user information may be information based on a captured image of the user. Generator 11 may generate the notification signal with timing of changes in, for example, operation details or operation conditions of first device 10, or may generate the notification signal at fixed time intervals.

Controller 12 controls primary operations of first device 10. The primary operations differ depending on the function of first device 10. For example, in the case where first device 10 is a washing machine, the primary operations are operations such as laundry, and in the case where first device 10 is a refrigerator, the primary operations are operations such as temperature control in the refrigerator.

Interface 14 transfers information between the user and first device 10. More specifically, interface 14 receives a user operation and converts the operation into a signal indicating the operation. Interface 14 may also present notification information that is provided to the user by first device 10. For example, interface 14 may present notification information by sounds, or may present the notification information via images such as characters. Interface 14 may, for example, be a touch panel, or may include a keyboard and a display.

Sensor unit 16 discriminates between one or more persons and generates a presence-absence signal including presence-absence information about each of the one or more persons. Sensor unit 16 may include, for example, an image capturing device and an image processor. Sensor unit 16 may discriminate the user by capturing an image of the user with the image capturing device and processing the captured image by the image processor.

Communicator 18 carries out communications with the other apparatuses and the one or more servers. Communicator 18 is one example of a first communicator that transmits the notification signal generated by generator 11 to first server 60. There are no particular limitations on the configuration of communicator 18, as long as it is possible to carry out communications with the other apparatuses and the like via network 90. In other words, there are no particular limitations on communicator 18, as long as the communicator is compliant with standards or the like used by network 90.

Second device 20 is one exemplary apparatus and a device selected by first server 60 as one of devices capable of presenting the notification information to the user who is in a presumed position presumed as the position of the user, when first device 10 has transmitted a notification signal including the notification information that is to be provided to the user. Second device 20 is the apparatus capable of presenting the notification information to the user who is in the presumed position among the plurality of apparatuses. The apparatus corresponding to second device 20 differs depending on the position of the user. In other words, the apparatus corresponding to second device 20 differs depending on the movement of the user. Thus, second device 20 is the apparatus temporality identified based on the behavior of the user. Second device 20 includes controller 22, interface 24, sensor unit 26, and communicator 28.

Controller 22 is, like controller 12 of first device 10, a processing unit that controls primary operations of second device 20.

Interface 24, like interface 14 of first device 10, transfers information between the user and second device 20.

Sensor unit 26, like sensor unit 16 of first device 10, discriminates between one or more persons and generates a presence-absence signal including presence-absence information about each of the one or more persons.

Communicator 28, like communicator 18 of first device 10, carriers out communications with the other apparatuses and the one or more servers. Communicator 28 is one example of a second communicator that receives a presentation signal including the notification information transmitted from first server 60.

First server 60 is one example of the servers and includes information acquirer 61 and presentation controller 66. In the present embodiment, first server 60 further includes discriminator 62 and device information database 63. In FIG. 1 and other drawings, the device information database is expressed as "device information DB".

Information acquirer 61 receives a notification signal and a presence-absence signal from first device 10 and acquires information including the user information and the notification information, which are included in the notification signal, and the presence-absence information, which is included in the presence-absence signal. Information acquirer 61 outputs the notification information and the presence-absence information to device information database 63 and discriminator 62.

Discriminator 62 discriminates the user on the basis of the user information acquired by information acquirer 61. Discriminator 62 associates the user with the notification information acquired by information acquirer 61. For example, the user information may include image information about the user, and discriminator 62 may discriminate the user on the basis of the image information. Discriminator 62 may use this image information and image information included in presence-absence information generated by the other apparatuses to detect whether the user is present near the other apparatuses.

Device information database 63 accumulates the notification information and the presence-absence information acquired by information acquirer 61. In the present embodiment, the notification information is accumulated in association with the user.

Presentation controller 66 determines a presumed position as the position of the user presumed based on the user information and the presence-absence information accumulated in device information database 63. Specifically, the presentation controller presumes the position of the user (i.e., the presumed position of the user) by identifying the user on the basis of the user information and presuming whether the user is present near each apparatus on the basis of the presence-absence information. For example, in the case where only one person has been detected in a house or the like where the plurality of apparatuses are located, on the basis of the presence-absence information, the detected person may be identified as the user, and the detected position of this person may be determined as the presumed position. Alternatively, in the case where the sensor of each apparatus includes, for example, an image capturing device and an image processor and is capable of discriminating between persons, the presumed position may be determined on the basis of the presence-absence information about each of the one or more persons, obtained from each apparatus.

Presentation controller 66 determines the presumed position of the user as described above and causes one of apparatuses that are capable of presenting the notification information to the user who is in the presumed position among the plurality of apparatuses, i.e., second device 20, to present the notification information. That is, presentation controller 66 selects, as second device 20, one apparatus that is capable of presenting sounds, images, or the like to the presumed position and transmits a presentation signal corresponding to the notification information to second device 20. Presentation controller 66 may also select and transmit part of the notification information to second device 20, or may transmit information indicating the form of notification of the notification information, along with the notification information.

Sensors 50a and 50b each discriminate between one or more persons and generate a presence-absence signal including presence-absence information about each of the one or more persons. For example, sensors 50a and 50b each may include an image capturing device and an image processor and discriminate the user by capturing an image of the user with the image capturing device and processing the captured image by the image processor.

### [1-2. Information Notification Method]

Next, an information notification method using information notification system 1 according to the present embodiment will be described with reference to FIGS. 2 and 3. FIG. 2 is a schematic diagram illustrating an exemplary configuration of information notification system 1 according to the present embodiment and an exemplary operation thereof. FIG. 3 is a flowchart of the information notification method according to the present embodiment.

Information notification system 1 illustrated in FIG. 2 includes first server 60 and a plurality of apparatuses. The plurality of apparatuses include first device 10, second device 20, apparatuses 30b and 30d, and sensors 50a and 50b, which are located in given house 80. House 80 includes rooms A to D. First device 10 and sensor 50a are located in room A. Equipment or device 30b and sensor 50b are located in room B. Second device 20 is located in room C. Equipment or device 30d is located in room D.

In the present exemplary configuration, first server 60 is provided outside house 80 via network 90 (not shown in FIG. 2).

First device 10 and second device 20 are a washing machine and an air cleaner, respectively. Interface 24 of second device 20 includes a touch panel through which information for use in identifying a user is input.

Equipment or devices 30b and 30d are an electromagnetic range and an air conditioner, respectively. The sensor unit of apparatus 30d includes, for example, an image capturing device and an image processor, discriminates between one or more persons, and generates a presence-absence signal including presence-absence information about each of the one or more persons. Sensors 50a and 50b each include an image capturing device and an image processor, discriminate between one or more persons, and generate a presence-absence signal including presence-absence information about each of the one or more persons.

In the information notification method according to the present embodiment, first, first device 10 in information notification system 1 is operated by a user as illustrated in FIG. 3. In response to this, generator 11 of first device 10 generates a notification signal including notification information and user information (S12). In the exemplary configuration illustrated in FIG. 2, when user U0 has operated interface 14 of first device 10, i.e., the washing machine, first device 10 starts to operate in accordance with the operation of user U0. Generator 11 of first device 10 generates a notification signal that includes notification information corresponding to the operation and user information corresponding to user U0.

Then, as illustrated in FIG. 3, the plurality of apparatuses in information notification system 1 each discriminate between one or more persons and generate a presence-absence signal including presence-absence information about each of the one or more persons (S14). In the exemplary configuration illustrated in FIG. 2, whether user U0 is present near each apparatus is sensed by detecting whether any person is present near the apparatus on the basis of the presence-absence signals received from first device 10, second device 20, apparatuses 30b and 30d, and sensors 50a and 50b included in the plurality of apparatuses and discriminating user U0 on the basis of image information or other information.

In the exemplary configuration illustrated in FIG. 2, a description is given of the operation performed by information notification system 1 when user U0 who uses first device 10 located in room A has operated first device 10 and then moved to room C. In room B, person U1 different from user U0 uses apparatus 30b.

In this case, after user U0 has operated first device 10 in room A and moved to room C, first device 10 senses with at least one of interface 14 or sensor unit 16 that user U0 is not present near first device 10. Similarly, sensor 50a senses that user U0 is not present near the sensor. Thus, first device 10 transmits, to first server 60, a notification signal that includes notification information corresponding to the operation of user U0 and user information indicating that the first device is used by user U0, and a presence-absence signal that includes presence-absence information indicating that user U0 is not present near first device 10. Sensor 50a transmits, to first server 60, a presence-absence signal that includes presence-absence information indicating that user U0 is not present near sensor 50a.

Equipment or device 30b and sensor 50b, located in room B, each transmit, to first server 60, a presence-absence signal that includes presence-absence information indicating that user U0 is not present near the apparatus or the sensor and that person U1 different from user U0 is present near the apparatus or the sensor. Specifically, apparatus 30b and sensor 50b each may transmit image information about person U1 or information indicating features of the image as the presence-absence information, or in the case where it is possible to identify person U1 corresponding to the image, may transmit information indicating that identified person U1 is present near the apparatus or the sensor as the presence-absence information. Second device 20 located in room C transmits, to first server 60, a presence-absence signal that includes presence-absence information indicating that user U0 is present near the second device. Specifically, second device 20 may transmit image information about user U0 or information indicating features of the image as the presence-absence information, or in the case where it is possible to identify user U0 corresponding to the image, information indicating that identified user U0 is present near the second device may be transmitted as the presence-absence information. Equipment or device 30d located in room D transmits, to first server 60, a presence-absence signal that includes presence-absence information indicating that user U0 is not present near apparatus 30d. As described above, whether user U0 is present in each room can be sensed using the plurality of apparatuses.

Then, as illustrated in FIG. 3, information acquirer 61 of first server 60 receives the notification signal and the presence-absence signals and acquires the user information and the notification information, which are included in the notification signal, and the presence-absence information, which is included in the presence-absence signal (S16). In the exemplary configuration illustrated in FIG. 2, first server 60 receives the notification signal from first device 10 and receives the presence-absence signals from first device 10, second device 20, apparatuses 30b and 30d, and sensors 50a and 50b. First server 60 also acquires the user information, the notification information, and the presence-absence information from each signal. Note that first device 10 is not identified until first server 60 receives the notification signal. In the example illustrated in FIG. 2, when first server 60 has received the notification signal, the apparatus serving as the transmission source of the notification signal, i.e., the washing machine, is identified as first device 10.

Then, as illustrated in FIG. 3, presentation controller 66 of first server 60 determines the position of the user presumed based on the user information and the presence-absence information, i.e., a presumed position, and causes one of apparatuses that are capable of presenting the notification information to the user who is in the presumed position among the plurality of apparatuses, i.e., second device 20, to present the notification information (S18). In the exemplary configuration illustrated in FIG. 2, first server 60 presumes from the user information received from first device 10 and the presence-absence information received from second device 20 that user U0 who uses first device 10 is present in room C,. That is, first server 60 determines room C as the presumed position of user U0. First server 60 selects second device 20 as one of the apparatuses capable of presenting the notification information to user U0 who is in the presumed position. That is, first server 60 identifies the apparatus located in room C, i.e., the air cleaner, as second device 20 on the basis of the presumed position of user U0. Then, first server 60 transmits, to second device 20, a presentation signal including notification information that is to be presented by second device 20.

Second device 20 receives the presentation signal and presents the notification information included in the presentation signal to user U0. For example, second device 20 uses interface 24 to present the notification information.

As described above, the notification information received from first device 10 can be presented via the other apparatus, i.e., second device 20, to user U0 who uses first device 10. As the notification information, for example, it is possible to provide information or the like that indicates the completion of laundry at first device 10, i.e., the washing machine. This enables user U0 who is even away from first device 10 to immediately know the completion of laundry.

According to information notification system 1 and the information notification method using this system according to the present embodiment, user U0 who uses first device 10 is discriminated and notification information is presented only to second device 20, which is the apparatus near user U0. This reduces the possibility of the notification information being presented to the other persons such as person U1. Accordingly, it is possible to reduce the occurrence of a situation in which persons other than user U0 may feel annoyed by the notification.

### [Embodiment 2]

An information notification system and an information notification method according to Embodiment 2 will be described. The information notification system and the information notification method according to the present embodiment differ from information notification system 1 and the information notification method according to Embodiment 1 mainly in that the first server causes the second device to present the notification information via another server. The following description of the information notification system and the information notification method according to the present embodiment focuses on the differences from information notification system 1 and the information notification method according to Embodiment 1.

### [2-1. Configuration]

First, a configuration of the information notification system according to the present embodiment will be described with reference to FIG. 4. FIG. 4 is a block diagram illustrating a functional configuration of information notification system 101 according to the present embodiment. As illustrated in FIG. 4, information notification system 101 according to the present embodiment, like information notification system 1 according to Embodiment 1, includes a plurality of apparatuses and one or more servers.

In the present embodiment, the plurality of apparatuses include first device 10, second device 120, and sensors 50a and 50b as illustrated in FIG. 4. The one or more servers include first server 160 and second server 70.

First server 160 includes information acquirer 61, presentation controller 166, discriminator 62, and device information database 63.

Presentation controller 166 according to the present embodiment, like presentation controller 66 according to Embodiment 1, determines the position of the user presumed based on user information and presence-absence information, i.e., a presumed position, and causes one of apparatuses that are capable of presenting the notification information to the user who is in the presumed position, among the plurality of apparatuses, i.e., second device 120, to present the notification information. In the present embodiment, presentation controller 166 causes second device 120 to present the notification information via second server 70. In this way, presentation controller 166 according to the present embodiment is capable of causing the apparatus operated by the other server to provide the notification information.

Second server 70 is a server that controls second device 120, and includes database 72. In FIG. 4 and other drawings, the database is expressed as "DB".

Database 72 is a database in which data for use in controlling second device 120 is accumulated. Database 72 receives signals from external devices and controls second device 120 on the basis of the received signals. In the present embodiment, database 72 receives a presentation signal from first server 160, converts the received presentation signal into a presentation signal for causing second device 120 to perform an operation corresponding to the received presentation signal, and transmits the converted presentation signal to second device 120.

Second device 120 is, like second device 20 according to Embodiment 1, one example of the apparatuses, receives a presentation signal from second server 70, and presents notification information on the basis of the presentation signal. In the present embodiment, second device 120 is, for example, a so-called smart speaker or smart display controlled by second server 70. Second device 120, like second device 20 according to Embodiment 1, includes controller 122, interface 124, sensor unit 126, and communicator 128.

Controller 122 is, like controller 22 according to Embodiment 1, a processing unit that controls primary operations of second device 120.

Interface 124, like interface 24 according to Embodiment 1, transfers information between the user and second device 120. For example, in the case where second device 120 is a smart speaker, interface 124 includes a microphone that receives sounds, and a sound ejector (in other words, a speaker) that ejects sounds on the basis of signals received from controller 122 and second server 70. In the case where second device 120 is a smart display, interface 124 includes a microphone that receives sounds, a sound ejector that ejects sounds on the basis of signals received from controller 122 and second server 70, and a display that displays an image on the basis of the signals received from controller 122 and second server 70.

Sensor unit 126, like sensor unit 26 according to Embodiment 1, discriminates between one or more persons and generates a presence-absence signal including presence-absence information about each of the one or more persons.

Communicator 128 carries out communications with the other apparatuses and the one or more servers. Communicator 128 is one example of a second communicator that receives a presentation signal including the notification information transmitted from first server 160. Communicator 128 receives the presentation signal including the notification information transmitted from first server 160 via second server 70.

### [2-2. Information Notification Method]

Next, an information notification method using information notification system 101 according to the present embodiment will be described with reference to FIG. 5. FIG. 5 is a schematic diagram illustrating an exemplary configuration of information notification system 101 according to the present embodiment and an exemplary operation thereof.

Information notification system 101 illustrated in FIG. 5 includes first server 160, second server 70, and a plurality of apparatuses. The plurality of apparatuses include first device 10, second device 120, apparatuses 30b, 30c, and 30d, and sensors 50a and 50b, which are located in given house 80. House 80 includes rooms A to D. First device 10 and sensor 50a are located in room A. Equipment or device 30b and sensor 50b are located in room B. Second device 120 and apparatus 30c are located in room C. Equipment or device 30d is located in room D.

Each apparatus located in rooms A, B, and D is similar to each apparatus located in rooms A, B, and D in the exemplary configuration illustrated in FIG. 2. In present exemplary configuration, apparatus 30c and second device 120 are located in room C. Equipment or device 30c is, for example, an air cleaner. Second device 120 is, for example, a smart speaker.

In present exemplary configuration, a description is given of the information notification method performed when user U0 has operated first device 10 and then moved to room C as in the exemplary configuration illustrated in FIG. 2.

First, user U0 operates interface 14 of first device 10, i.e., the washing machine. Generator 11 of first device 10 generates a notification signal that includes notification information corresponding to the operation and user information corresponding to user U0.

Then, whether the user is present near each apparatus is sensed by detecting whether any person is present near each apparatus and discriminating the user on the basis of image information or other information.

After user U0 has moved from room A to room C, first device 10 transmits, to first server 160, a notification signal that includes notification information corresponding to the operation of user U0 and user information indicating that the first device is used by user U0, and a presence-absence signal that includes presence-absence information indicating that user U0 is not present near first device 10.

Equipment or device 30b and sensor 50b, located in room B, each transmit, to first server 160, a presence-absence signal that includes presence-absence information indicating that user U0 is not present near the apparatus or the sensor and that person U1 different from user U0 is present near the apparatus or the sensor. At least one of second device 120 or apparatus 30c, located in room C, transmits, to first server 160, a presence-absence signal that includes presence-absence information indicating that user U0 is present near the device or the apparatus. Equipment or device 30d located in room D transmits, to first server 160, a presence-absence signal that includes presence-absence information indicating that user U0 is not present near apparatus 30d. As described above, whether user U0 is present in each room can be sensed using the plurality of apparatuses.

Then, first server 160 receives the notification signal from first device 10 and the presence-absence signals from first device 10, second device 120, apparatuses 30b, 30c, and 30d, and sensors 50a and 50b. First server 160 also acquires the user information, the notification information, and the presence-absence information from each signal. Note that first server 160 may receive the presence-absence signal output from second device 120 via second server 70.

Then, on the basis of the user information received from first device 10 and the presence-absence information received from at least one of second device 120 or apparatus 30c, first server 160 presumes that user U0 who uses first device 10 is present in room C. That is, first server 160 determines room C as the presumed position of user U0. First server 160 selects second device 120 as one of apparatuses capable of presenting notification information to user U0 who is present in room C and transmits, to second server 70 that controls second device 120, a presentation signal including notification information that is to be presented by second device 120. Second server 70 receives the presentation signal from first server 160, converts the received presentation signal into a presentation signal corresponding to second device 120, and transmits the converted presentation signal to second device 120. Second device 120 receives the converted presentation signal and presents the notification information included in the presentation signal to user U0. For example, second device 120 presents the notification information by sounds via interface 124.

Accordingly, information notification system 101 and the information notification method using this system according to the present embodiment can achieve similar effects to the effects achieved by information notification system 1 and the information notification method according to Embodiment 1.

### [Embodiment 3]

An information notification system and an information notification method according to Embodiment 3 will be described. The information notification system and the information notification method according to the present embodiment differ from information notification system 101 and the information notification method according to Embodiment 2 mainly in that notification is provided in consideration of the behavior of a user. The following description of the information notification system and the information notification method according to the present embodiment focuses on the differences from information notification system 101 and the information notification method according to Embodiment 2.

### [3-1. Configuration]

First, a configuration of the information notification system according to the present embodiment will be described with reference to FIG. 6. FIG. 6 is a block diagram illustrating a functional configuration of information notification system 201 according to the present embodiment. As illustrated in FIG. 6, information notification system 201 according to the present embodiment, like information notification system 101 according to Embodiment 2, includes a plurality of apparatuses and one or more server.

In the present embodiment, the plurality of apparatuses include first device 10, second device 120, and sensors 50a and 50b as illustrated in FIG. 6. The one or more servers include first server 260 and second server 70.

First server 260 includes information acquirer 61, presentation controller 266, discriminator 62, device information database 63, behavior extractor 64, and behavior information database 65.

Behavior extractor 64 extracts behavior information that is information about the behavior of the user who uses first device 10, on the basis of the user information, the notification information, and the presence-absence information accumulated in device information database 63.

Behavior information database 65 accumulates behavior information about each user, extracted by behavior extractor 64. For example, behavior information database 65 may accumulate behavior information about each user over a predetermined period of time and delete the information in order from the older piece of information.

Presentation controller 266 according to the present embodiment, like presentation controller 166 according to Embodiment 2, determines the position of the user presumed based on the user information and the presence-absence information, i.e., a presumed position, and causes one of apparatuses that are capable of presenting the notification information to the user who is in the presumed position among the plurality of apparatuses, i.e., second device 120, to present the notification information. In the present embodiment, presentation controller 266 also uses the behavior information accumulated in behavior information database 65 as a basis to cause second device 120 to present the notification information. Presentation controller 266 determines a predetermined behavior as a standby target behavior. If the presumed behavior of user U0 matches the standby target behavior, presentation controller 266 does not cause second device 120 to present the notification information, and if the presumed behavior of user U0 is a behavior other than the standby target behavior, presentation controller 266 causes second device 120 to present the notification information. Presentation controller 266 also determines a predetermined position as a standby target position. If the presumed position of the user matches the standby target position, presentation controller 266 does not cause second device 20 to present the notification information, and if the presumed position is a position other than the standby target position, presentation controller 266 causes second device 20 to present the notification information. Specific operations of presentation controller 266 will be described later in detail.

### [3-2. Information Notification Method]

Next, the information notification method using information notification system 201 according to the present embodiment will be described with reference to FIGS. 7 and 8. FIG. 7 is a schematic diagram illustrating an exemplary configuration of information notification system 201 according to the present embodiment and an exemplary operation thereof. FIG. 8 is a flowchart of the information notification method according to the present embodiment.

In the exemplary configuration illustrated in FIG. 7, information notification system 201 includes first server 260, second server 70, and a plurality of apparatuses. The plurality of apparatuses include first device 10, second device 120, and apparatuses 30b, 30c, and 30d, which are located in given house 80. First device 10 is located in room A. Equipment or device 30b is located in room B. Second device 120 and apparatus 30c are located in room C. Equipment or device 30d is located in room D.

First device 10 and second device 120 are a washing machine and a smart speaker, respectively. Equipment or devices 30b, 30c, and 30d are a bath water heater, a refrigerator, and an air conditioner, respectively.

In the information notification method according to the present embodiment, first, first device 10 of information notification system 201 is operated by a user as illustrated in FIG. 7. In response to this, generator 11 of first device 10 generates a notification signal including notification information and user information (S12). In the exemplary configuration illustrated in FIG. 7, when user U0 has operated interface 14 of first device 10, i.e., the washing machine, first device 10 starts to operate in accordance with the operation of user U0. Generator 11 of first device 10 generates a notification signal that includes notification information corresponding to the operation and user information corresponding to user U0.

Then, as illustrated in FIG. 8, the plurality of apparatuses in information notification system 201 each discriminate between one or more persons and generate a presence-absence signal including presence-absence information about each of the one or more persons (S14). In the exemplary configuration illustrated in FIG. 7, whether user U0 is present near each apparatus is sensed by detecting whether any person is present near each apparatus on the basis of the presence-absence signals received from first device 10, second device 120, and apparatuses 30b, 30c, and 30d included in the plurality of apparatuses and discriminating user U0 on the basis of image information or other information.

In the exemplary configuration illustrated in FIG. 7, a description is given of the operation performed by information notification system 201 when user U0 who uses first device 10 located in room A has operated first device 10 and then moved to room B and further to room C.

In this case, after user U0 has operated first device 10 in room A and moved to room B, first device 10 senses with at least one of interface 14 or sensor unit 16 that user U0 is not present near first device 10. Thus, first device 10 transmits, to first server 260, a notification signal that includes notification information corresponding to the operation of user U0 and user information indicating that the first device is used by user U0, and a presence-absence signal that includes presence-absence information indicating that user U0 is not present near first device 10. Sensor 50a transmits, to first server 260, a presence-absence signal that includes presence-absence information indicating that user U0 is not present near sensor 50a.

Equipment or device 30b located in room B transmits, to first server 260, a presence-absence signal that includes presence-absence information indicating that user U0 is present near the apparatus. Second device 120 and apparatus 30c, located in room C, each transmit, to first server 260, a presence-absence signal that includes presence-absence information indicating that user U0 is not present near the second device or the apparatus. Equipment or device 30d located in room D transmits, to first server 260, a presence-absence signal that includes presence-absence information indicating that user U0 is not present near apparatus 30d. As described above, whether user U0 is present in each room can be sensed using the plurality of apparatuses.

Then, as illustrated in FIG. 8, information acquirer 61 of first server 260 receives the notification signal and the presence-absence signals and acquires the user information and the notification information, which are included in the notification signal, and the presence-absence information, which is included in the presence-absence signal (S16). In the exemplary configuration illustrated in FIG. 7, first server 260 receives the notification signal from first device 10 and the presence-absence signals from first device 10, second device 120, and apparatuses 30b, 30c, and 30d. First server 260 also acquires the user information, the notification information, and the presence-absence information from each signal.

Then, as illustrated in FIG. 8, presentation controller 266 of first server 260 presumes the behavior of the user (S218). Specifically, the behavior of the user is presumed based on the user information and the presence-absence information. In the example illustrated in FIG. 7, room B, i.e., the bathroom, is determined as the presumed position of user U0 on the basis of the presence-absence information received from apparatus 30b. From this, behavior extractor 64 presumes that the current behavior of user U0 is taking a bath. Behavior information database 65 accumulates the behavior information indicating that user U0 is taking a bath.

Presentation controller 266 determines room B as the presumed position of user U0 and determines taking a bath as the presumed behavior on the basis of the presence-absence information received from device information database 63 and the behavior information received from behavior information database 65.

Then, presentation controller 266 determines whether the presumed behavior of user U0 matches the standby target behavior during which notification is waited for, or determines whether the presumed position of user U0 matches the standby target position (S220). The standby target behavior as used herein refers to, among behaviors of user U0, an inappropriate behavior for user U0 to receive the notification information. For example, in the case where user U0 exhibits a behavior such as taking a bath, even if notification information is presented, it is difficult for the user to take immediate action for the notification information. That is, it is difficult for user U0 to immediately move from room B, i.e., the bathroom, to room A where first device 10 is located. Accordingly, in present exemplary configuration, the behavior of taking a bath is determined as the standby target behavior. The standby target position as used herein refers to, among presumed positions of user U0, an inappropriate position for user U0 to receive the notification information. For example, in the case where the presumed position of user U0 is room B, i.e., the bathroom, it is presumed that user U0 is taking a bath. Thus, even if notification information is presented, it is difficult for user U0 to take immediate action for the notification information, as in the above-described case of the standby target behavior. Accordingly, in present exemplary configuration, room B, i.e., the bathroom, is determined as the standby target position.

Accordingly, if the presumed behavior of user U0 matches the standby target behavior or if the presumed position of user U0 matches the standby target position (Yes in S220), the procedure returns to step S14, in which whether user U0 is present is sensed again. That is, presentation controller 266 waits until user U0 completes the standby target behavior or until the presumed position of user U0 becomes out of the standby target position, before presenting the notification information. In this way, if the behavior of user U0 matches the standby target behavior or if the presumed position of user U0 matches the standby target position, presentation controller 266 of first server 260 does not cause second device 120 to present the notification information.

In the example illustrated in FIG. 7, while user U0 is in room B, i.e., the bathroom, it is determined that user U0 is taking a bath, i.e., exhibits the standby target behavior (or user U0 is in the standby target position), and the presentation of the notification information is waited for.

As illustrated in FIG. 8, if the presumed behavior of user U0 is not the standby target behavior or if the presumed position of user U0 is not the standby target position (No in S220), presentation controller 266 presents the notification information in the same manner as in the information notification method according to Embodiment 2 (S222).

In the example illustrated in FIG. 7, when it is sensed on the basis of the presence-absence information or other information that user U0 has moved from room B to room C, presentation controller 266 determines that the presumed behavior of user U0 is not the standby target behavior (or the presumed position of the user is not the standby target position) and presents the notification information. In the exemplary configuration illustrated in FIG. 7, presentation controller 266 causes second device 120 located near user U0 to present the notification information.

In this way, if the presumed behavior of user U0 is a behavior other than the standby target behavior or if the presumed position of user U0 is a position other than the standby target position, presentation controller 266 of first server 260 causes second device 120 to present the notification information.

Information notification system 201 and the information notification method according to the present embodiment can achieve similar effects to the effects achieved by information notification system 101 and the information notification method according to Embodiment 2.

Moreover, in information notification system 201 and the information notification method according to the present embodiment, the presentation of the notification information is waited for if conditions are not appropriate for the presentation of the notification information. This reduces the occurrence of a situation in which it is difficult to make effective use of the presentation of the notification information. That is, information notification system 201 and the information notification method according to the present embodiment enable presenting the notification information with more efficiency.

### [3-3. Variations]

Next, an information notification system and an information notification method according to a variation of the present embodiment will be described. This variation differs from information notification system 201 and the information notification method according to Embodiment 2 in that the presence-absence information includes information about operations of apparatuses, i.e., operation information, and that the behavior of the user is presumed based on the operation information. Hereinafter, the information notification system and the information notification method according to this variation will be described with reference to FIG. 9, focusing on the differences from information notification system 201 and the information notification method according to Embodiment 2.

FIG. 9 is a schematic diagram illustrating an exemplary configuration of information notification system 201a according to this variation and an exemplary operation thereof.

In the exemplary configuration illustrated in FIG. 9, information notification system 201a includes first server 260, second server 70, and a plurality of apparatuses. The plurality of apparatuses include first device 10, second device 20, and apparatuses 30b, 230b, 30c, and 30d, which are located in given house 80. First device 10 is located in room A. Second device 20 and apparatuses 30b and 230b are located in room B. Equipment or device 30c is located in room C. Equipment or device 30d is located in room D.

In this variation, second device 20, apparatus 30b, and apparatus 230b, located in room B, are a refrigerator, an electromagnetic range, and a smart speaker, respectively. In this variation, room B is a kitchen. Equipment or device 230b is controlled by second server 70.

In this exemplary configuration, a description is given of an exemplary operation performed when user U0 who uses first device 10 has operated first device 10 located in room A and then moved to room B to use apparatus 30b, i.e., the electromagnetic range. In room C, person U1 is present.

First, when user U0 has operated interface 14 of first device 10, i.e., the washing machine, first device 10 starts to operate in accordance with the operation of user U0. Generator 11 of first device 10 generates a notification signal that includes notification information corresponding to the operation and user information corresponding to user U0.

Then, whether user U0 is present near each apparatus is sensed by detecting whether any person is present near each apparatus on the basis of the presence-absence signals received from first device 10, second device 20, and apparatuses 30b, 230b, 30c, and 30d and discriminating user U0 on the basis of image information or other information.

After user U0 has operated first device 10 in room A and moved to room B, first device 10 senses with at least one of interface 14 or sensor unit 16 that user U0 is not present near first device 10. Thus, first device 10 transmits, to first server 260, a notification signal that includes notification information corresponding to the operation of user U0 and user information indicating that the first device is used by user U0, and a presence-absence signal that includes presence-absence information indicating that user U0 is not present near first device 10.

Moreover, at least one device among apparatuses 30b and 230b and second device 20, located in room B, each transmit, to first server 260, a presence-absence information indicating that user U0 is present near the apparatus or the second device. Equipment or device 30b generates a presence-absence signal that includes, as the presence-absence information, operation information indicating that the apparatus is being used, and transmits the presence-absence signal to first server 260.

Equipment or device 30c located in room C transmits, to first server 260, a presence-absence signal that includes presence-absence information indicating that user U0 is not present near the apparatus and that person U1 is present near the apparatus. Equipment or device 30d located in room D transmits, to first server 260, a presence-absence signal that includes presence-absence information indicating that user U0 is not present near apparatus 30d. As described above, whether user U0 is present in each room can be sensed using the plurality of apparatuses.

Then, first server 260 receives the notification signal from first device 10 and receives the presence-absence signals from first device 10, second device 20, apparatuses 30b, 230b, 30c, and 30d. First server 260 also acquires the user information, the notification information, and the presence-absence information from each signal.

It is determined on the basis of the presence-absence information received from at least one device among apparatuses 30b and 230b and second device 20 that the presumed position of user U0 is room B, i.e., the kitchen. It is also presumed that the behavior of user U0 is cooking, on the basis of the operation information indicating that apparatus 30b or the electromagnetic range is currently being used. Behavior information database 65 accumulates the behavior information indicating that user U0 is cooking.

Presentation controller 266 determines room B as the presumed position of user U0 and cooking as the presumed behavior thereof, on the basis of the presence-absence information received from device information database 63 and the behavior information received from behavior information database 65.

Then, presentation controller 266 determines whether the presumed behavior of user U0 matches the standby target behavior during which notification is waited for, or determines whether the presumed position of user U0 matches the standby target position.

In the case where user U0 is cooking, presentation controller 266 determines that user U0 does not exhibit the standby target behavior. Presentation controller 266 also determines that the presumed position of user U0, i.e., room B (i.e., kitchen), is not the standby target position.

Then, presentation controller 266 causes second device 20 to present the notification information. Here, presentation controller 266 selects second device 20 on the basis of the operation information received from apparatus 30b. In the exemplary configuration illustrated in FIG. 9, the presentation controller presumes from the operation information that user U0 is cooking, and selects, as second device 20, the refrigerator that is the apparatus located near apparatus 30b and highly possibly used during cooking. For example, in the case where interface 24 of second device 20 includes a display, notification information may be presented on the display, or in the case where interface 24 includes a sound ejector, notification information may be presented via the sound ejector.

Information notification system 201a and the information notification method using this system according to this variation can achieve similar effects to the effects achieved by information notification system 1 and the information notification method using this system according to Embodiment 1. According to this variation, second device 20 is selected based on the operation information about apparatus 30b, which relates to the behavior of user U0, so that notification information can be presented more reliably to user U0.

### [Embodiment 4]

An information notification system and an information notification method according to Embodiment 4 will be described. The information notification system and the information notification method according to the present embodiment differ from information notification system 201 and the information notification method according to Embodiment 3 mainly in that the form of presentation changes in accordance with presentation setting information that is information about a user. The following description of the information notification system and the information notification method according to the present embodiment focuses on the differences from information notification system 201 and the information notification method according to Embodiment 3.

### [4-1. Configuration]

First, a configuration of the information notification system according to the present embodiment will be described with reference to FIG. 10. FIG. 10 is a block diagram illustrating a functional configuration of information notification system 301 according to the present embodiment. As illustrated in FIG. 10, information notification system 301 according to the present embodiment, like information notification system 201 according to Embodiment 3, includes a plurality of apparatuses and one or more servers.

In the present embodiment, the plurality of apparatuses include first device 10, second device 20, and sensors 50a and 50b as illustrated in FIG. 10. The one or more servers include first server 360 and second server 70.

First server 360 includes information acquirer 61, presentation controller 366, discriminator 62, device information database 63, behavior extractor 64, and behavior information database 65.

Presentation controller 366 according to the present embodiment, like presentation controller 266 according to Embodiment 3, determines the position of the user on the basis of the user information and the presence-absence information, i.e., a presumed position, and causes one of apparatuses that are capable of presenting the notification information to the user who is in the presumed position among the plurality of apparatuses, i.e., second device 20, to present the notification information. In the present embodiment, presentation controller 366 changes the form of presentation in accordance with presentation setting information that is information about the user. Specific operations of presentation controller 366 will be described later in detail.

### [4-2. Information Notification Method]

Next, the information notification method using information notification system 301 according to the present embodiment will be described with reference to FIG. 11. FIG. 11 is a schematic diagram illustrating an exemplary configuration of information notification system 301 according to the present embodiment and an exemplary operation thereof.

Information notification system 301 illustrated in FIG. 11 includes first server 360, second server 70, and a plurality of apparatuses. The plurality of apparatuses include first device 10, second device 20, apparatuses 30b and 30d, and sensors 50a and 50b, which are located in given house 80. First device 10 and sensor 50a are located in room A. Equipment or device 30b and sensor 50b are located in room B. Second device 20 is located in room C. Equipment or device 30d is located in room D.

First device 10, second device 20, apparatuses 30b and 30d, and sensors 50a and 50b respectively have similar configurations to the configurations of first device 10, second device 20, apparatuses 30b and 30d, and sensors 50a and 50b according to Embodiment 1.

In the information notification method according to the present embodiment, when user U0 has operated interface 14 of first device 10, i.e., the washing machine, in the exemplary configuration illustrated in FIG. 11, first device 10 starts to operate in accordance with the operation of user U0. Generator 11 of first device 10 generates a notification signal that includes notification information corresponding to the operation and user information corresponding to user U0.

Then, whether user U0 is present near each apparatus is sensed by detecting whether any person is present near each apparatus on the basis of the presence-absence signals received from first device 10, second device 20, apparatuses 30b and 30d, and sensors 50a and 50b included in the plurality of apparatuses and discriminating user U0 on the basis of image information or other information.

In the exemplary configuration illustrated in FIG. 11, a description is given of the operation performed by information notification system 301 when user U0 who uses first device 10 located in room A has operated first device 10 and then moved to room C. Also, person U1 different from user U0 uses apparatus 30b in room B.

In this case, after user U0 has operated first device 10 in room A and moved to room C, first device 10 senses with at least one of interface 14 or sensor unit 16 that user U0 is not present near first device 10. Similarly, sensor 50a senses that user U0 is not present near the sensor. Thus, first device 10 transmits, to first server 360, a notification signal that includes notification information corresponding to the operating of user U0 and user information indicating that the first device is used by user U0, and a presence-absence signal that includes presence-absence information indicating that user U0 is not present near first device 10. Sensor 50a transmits, to first server 360, a presence-absence signal that includes presence-absence information indicating that user U0 is not present near sensor 50a.

Equipment or device 30b and sensor 50b, located in room B, each transmit, to first server 360, a presence-absence signal that includes presence-absence information indicating that user U0 is not present near the apparatus or the sensor and that person U1 different from user U0 is present near the apparatus or the sensor. Second device 20 located in room C transmits, to first server 360, a presence-absence signal that includes presence-absence information indicating that user U0 is present near the second device. Equipment or device 30d located in room D transmits, to first server 360, a presence-absence signal that includes presence-absence information indicating that user U0 is not present near apparatus 30d. As described above, whether user U0 is present in each room can be sensed using the plurality of apparatuses.

Then, first server 360 receives the notification signal from first device 10 and the presence-absence signals from first device 10, second device 20, apparatuses 30b and 30d, and sensors 50a and 50b. First server 360 also acquires the user information, the notification information, and the presence-absence information from each signal. Note that first device 10 is not identified until first server 360 receives the notification signal. In the example illustrated in FIG. 11, upon receipt of the notification signal, the washing machine, which is the apparatus serving as the transmission source of the notification signal, is identified as first device 10.

Then, first server 360 presumes from the user information received from first device 10 and the presence-absence information received from second device 20 that user U0 who uses first device 10 is present in room C. That is, first server 360 determines room C as the presumed position of user U0. First server 360 selects second device 20 as one of apparatuses capable of presenting notification information to user U0 who is in the presumed position.

First server 360 transmits, to second device 20, a presentation signal including notification information that is to be presented by second device 20. In the present embodiment, presentation controller 366 of first server 360 changes the form of presentation in accordance with presentation setting information that is information about user U0. In the example illustrated in FIG. 11, the presentation setting information includes presence-absence information, and second device 20 includes a display that displays a notification image corresponding to the notification information. In the present embodiment, interface 24 of second device 20 includes a display. In the present embodiment, the presentation setting information includes distance D0 from the presumed position of user U0 to second device 20, and when distance D0 is less than a predetermined threshold value, presentation controller 366 increases the amount of information to be displayed in the notification image from the amount of information to be displayed when distance D0 is greater than or equal to the predetermined threshold value. Such a notification image will be described with reference to FIGS. 12A and 12B. FIGS.12A and 12B are diagrams respectively illustrating one and another examples of the notification image displayed on interface 24 of second device 20 according to the present embodiment.

The notification image illustrated in FIG. 12A includes only character information indicating the remaining time for laundry. On the other hand, the notification image illustrated in FIG. 12B includes information such as the course name of laundry operations ("standard course") and characters indicating the time required for each operation and the remaining time, the information being displayed with smaller characters than numerals illustrated in FIG. 12A.

If distance D0 from the presumed position of user U0 to second device 20 is greater than the predetermined threshold value, presentation controller 366 causes second device 20 to present a notification image with a small amount of information as illustrated in FIG. 12A, because it is difficult for user U0 to read small characters displayed on the display of second device 20. On the other hand, if distance D0 is less than the predetermined threshold value, presentation controller 366 causes second device 20 to present a notification image with a large amount of information as illustrated in FIG. 12B, because user U0 is able to read small characters displayed on the display of second device 20. The predetermined threshold value may be appropriately set depending on the configuration of the display or the like, and may be approximately 1 m, for example.

Accordingly, it is possible to present appropriate notification information depending on distance D0 from user U0 to second device 20.

Note that the configuration of information notification system 301 and the information notification method are not limited to those described above. For example, in the exemplary configuration described above, although presentation controller 366 changes the notification image in accordance with the relationship between distance D0 and the predetermined threshold value, controller 22 of second device 20 may change the notification image. Specifically, if distance D0 is less than the predetermined threshold value, interface 24 may be controlled so as to present the notification image as instructed by presentation controller 366, and if distance D0 is greater than the predetermined threshold value, interface 24 may be controlled so as to present the notification image with a reduced amount of information.

In the exemplary configuration described above, although presentation controller 366 presents the notification information in the form of a notification image, the notification information may be presented by sounds. For example, in the case where distance D0 from the presumed position of user U0 to second device 20 is less than a predetermined threshold value, presentation controller 366 may cause second device 20 to present the notification information at a lower volume level than in the case where distance D0 is greater than or equal to the predetermined threshold value. Alternatively, presentation controller 366 may cause second device 20 to present the notification information at a volume level that increases with increasing distance D0 from the presumed position of user U0 to second device 20. By so doing, when user U0 is present relatively near second device 20, the notification information is provided at a relatively low volume level and accordingly user U0 feels less annoyed by the notification. When user U0 is present relatively away from second device 20, the notification information is provided at a relatively high volume level, which reduces the occurrence of a situation in which user U0 cannot hear the notification information.

The presentation setting information may include at least one of the user information or the presence-absence information. In the case where the presentation setting information includes the user information, presentation controller 366 may change the form of presentation in accordance with the user. For example, in the case where the user is an aged person, a notification image with a smaller amount of information than in the case where the user is not an aged person may be presented, because it may be difficult for the user to read small characters. Moreover, in the case where the user is an aged person, notification information may be presented at a higher volume level of sounds than in the case where the user is not an aged person, because it may be difficult for the user to hear quiet sounds.

As described above, information notification system 301 and the information notification method using this system according to the present embodiment make it possible to present notification information in an appropriate form of presentation in accordance with conditions relating to the user.

### [Embodiment 5]

An information notification system and an information notification method according to Embodiment 5 will be described. The information notification system and the information notification method according to the present embodiment differ from information notification system 201 and the information notification method according to Embodiment 3 mainly in that it is possible to provide notification information even in the case where a user is present outdoors. The following description of the information notification system and the information notification method according to the present embodiment focuses on the differences from information notification system 201 and the information notification method according to Embodiment 3.

### [5-1. Configuration]

First, a configuration of the information notification system according to the present embodiment will be described with reference to FIG. 13. FIG. 13 is a block diagram illustrating a functional configuration of information notification system 401 according to the present embodiment. As illustrated in FIG. 13, information notification system 401 according to the present embodiment, like information notification system 201 according to Embodiment 3, includes a plurality of apparatuses and one or more servers.

In the present embodiment, the plurality of apparatuses include first device 10, second device 420, and sensors 50a and 50b as illustrated in FIG. 13. The one or more servers include first server 460 and second server 70.

Second device 420 is a mobile apparatus. Second device 420 acquires position information indicating the position of the second device. Second device 420 generates presence-absence information including this position information and transmits a presence-absence signal including the presence-absence information to first server 460. Second device 420 is, for example, a smartphone. Second device 420, like second device 20 according to Embodiment 1, includes controller 422, interface 424, sensor unit 426, and communicator 428.

Controller 422 is, like controller 22 according to Embodiment 1, a processing unit that controls primary operations of second device 420 such as telephone calls and data communications.

Interface 424, like interface 24 according to Embodiment 1, transfers information between the user and second device 420.

Sensor unit 426, like sensor unit 26 according to Embodiment 1, discriminates between one or more persons and generates a presence-absence signal including presence-absence information about each of the one or more persons. In the present embodiment, sensor unit 426 generates position information indicating the position of second device 420. Sensor unit 426 may also be, for example, a global positioning system (GPS).

Communicator 428 carries out communications with the other apparatuses and the one or more servers. Communicator 428 is one example of a second communicator that receives a presentation signal including notification information transmitted from first server 460.

First server 460 includes information acquirer 61, presentation controller 466, discriminator 62, device information database 63, behavior extractor 64, and behavior information database 65.

Presentation controller 466 according to the present embodiment, like presentation controller 266 according to Embodiment 3, determines the position of the user presumed based on user information and presence-absence information, i.e., a presumed position, and causes one of apparatuses that are capable of presenting the notification information to the user who is in the presumed position among the plurality of apparatuses, i.e., second device 420, to present the notification information. In the present embodiment, presentation controller 466 determines the presumed position of the user on the basis of the position information.

### [5-2. Information Notification Method]

Next, the information notification method using information notification system 401 according to the present embodiment will be described with reference to FIG. 14. FIG. 14 is a schematic diagram illustrating an exemplary configuration of information notification system 401 according to the present embodiment and an exemplary operation thereof.

Information notification system 401 illustrated in FIG. 14 includes first server 460, second server 70, and a plurality of apparatuses. The plurality of apparatuses include first device 10, second device 420, apparatuses 30b, 30c, and 30d, and sensors 50a and 50b. The devices and sensors other than second device 420 are located in given house 80. First device 10 and sensor 50a are located in room A. Equipment or device 30b and sensor 50b are located in room B. Equipment or device 30c is located in room C. Equipment or device 30d is located in room D.

First device 10, apparatus 30b, apparatus 30c, apparatus 30d, sensor 50a, and sensor 50b respectively have similar configurations to the configurations of first device 10, apparatus 30b, second device 20, apparatus 30d, sensor 50a, and sensor 50b according to Embodiment 1.

In the information notification method according to the present embodiment, when user U0 has operated interface 14 of first device 10, i.e., the washing machine, in the exemplary configuration illustrated in FIG. 14, first device 10 starts to operate in accordance with the operation of user U0. Generator 11 of first device 10 generates a notification signal that includes notification information corresponding to the operation and user information corresponding to user U0.

Then, whether user U0 is present near each apparatus is sensed by detecting whether any person is present near each apparatus on the basis of the presence-absence signals received from first device 10, second device 420, apparatuses 30b, 30c, and 30d, and sensors 50a and 50b included in the plurality of apparatuses and discriminating user U0 on the basis of image information or other information.

In the exemplary configuration illustrated in FIG. 14, a description is given of the operation performed by information notification system 401 when user U0 who uses first device 10 located in room A has operated first device 10 and then moved to the outside of house 80. In room B, person U1 different from user U0 uses apparatus 30b.

In this case, after user U0 has operated first device 10 in room A and moved to the outside of house 80, first device 10 senses with at least one of interface 14 or sensor unit 16 that user U0 is not present near first device 10. Similarly, sensor 50a also detects that user U0 is not present near the sensor. Thus, first device 10 transmits, to first server 460, a notification signal that includes notification information corresponding to the operation of user U0 and user information indicating that the first device is used by user U0, and a presence-absence signal that includes presence-absence information indicating that user U0 is not present near first device 10. Sensor 50a transmits, to first server 460, a presence-absence signal that includes presence-absence information indicating that user U0 is not present near sensor 50a.

Equipment or device 30b and sensor 50b, located in room B, each transmit, to first server 460, a presence-absence signal that includes presence-absence information indicating that user U0 is not present near the apparatus or the sensor and that person U1 different from user U0 is present near the apparatus or the sensor. Equipment or device 30 located in room C transmits, to first server 460, a presence-absence signal that includes presence-absence information indicating that user U0 is not present near apparatus 30c. Equipment or device 30d located in room D transmits, to first server 460, a presence-absence signal that includes presence-absence information indicating that user U0 is not present near apparatus 30d. As described above, the absence of user U0 in house 80 can be sensed using the plurality of apparatuses.

Second device 420 transmits a presence-absence signal to first server 460. This presence-absence signal includes the position information about second device 420.

Then, first server 460 receives the notification signal from first device 10 and the presence-absence signals from first device 10, second device 420, apparatuses 30b, 30c, and 30d, and sensors 50a and 50b. First server 460 also acquires the user information, the notification information, and the presence-absence information from each signal.

Then, first server 460 presumes from the user information received from first device 10 and the presence-absence information received from second device 420 that user U0 who uses first device 10, along with second device 420, is outside house 80. That is, first server 460 determines the position of second device 420 as the presumed position of user U0. First server 460 selects second device 420 as one of apparatuses capable of presenting notification information to user U0 who is in the presumed position.

First server 460 transmits, to second device 420, a presentation signal including notification information that is to be presented by second device 420.

As described above, according to the present embodiment, it is possible to provide the notification information even if user U0 is outside house 80.

### [Variations]

While embodiments and their variations of the information notification system and the like according to the present disclosure have been described thus far, the present disclosure is not intended to be limited to the above-described embodiments and variations thereof. The present disclosure may also include modes obtained by making various modifications conceivable by those skilled in the art to the embodiments and modes constituted by any combination of constituent elements in different embodiments without departing from the scope of the present invention, which is defined by the appended claims.

For example, each of the one or more servers may be located inside a predetermined space such as a house, or may be integrated with one or more apparatuses.

The sensor units of the apparatuses may have the same configuration, or may have different configurations.

The presumed position determined by each presentation controller according to the above-described embodiments and variations is merely the position of a person who is presumed as the user, and the user does not necessarily have to be in the presumed position. That is, each presentation controller only has to cause one of apparatuses capable of presenting notification information to the person who is in the presumed position among the plurality of apparatuses, i.e., the second device, to present the notification information.

Each step in the information notification methods according to the above-described embodiments and variations thereof may be executed by a computer (computer system). The present disclosure may be implemented as a program for causing a computer to execute the steps included in these methods. The present disclosure may also be implemented as a non-transitory computer-readable recording medium for recording that program, such as a CD-ROM.

For example, in the case where the present disclosure is implemented as a program (software), each step is executed by executing the program using hardware resources such as the CPU, memory, and input/output circuit of the computer. That is, each step is executed by the CPU acquiring and computing data from the memory or the input/output circuit and outputting the result of computation to the memory and the input/output circuit.

The plurality of constituent elements included in the information notification systems according to the above-described embodiments each may be implemented as a dedicated circuit or a general-purpose circuit. These constituent elements may be implemented as a single circuit, or may be implemented as a plurality of circuits.

The plurality of constituent elements included in the information notification systems according to the above-described embodiments may be implemented in the form of large scale integration (LSI), i.e., an integrated circuit (IC). These constituent elements may be individually packaged into a single chip, or some or all of them may be packaged into a single chip. LSI may also be referred to as a system LSI, a super LSI, or an ultra LSI depending on the degree of integration.

The integrated circuit is not limited to LSI, and may be implemented as a dedicated circuit or a general-purpose processor. As described above, it is possible to use a programmable FPGA or a reconfigurable processor capable of reconfiguring connection and settings of circuit cells inside LSI.

Moreover, if other circuit integration techniques that replace LSIs make their debuts with the advance of semiconductor technology or with derivation from another technology, such techniques may be used to integrate the constituent elements included in the information notification systems into an integrated circuit.

The present disclosure also includes modes achieved by any combination of constituent elements and functions described in each embodiment without departing from the scope of the present invention, which is defined by the appended claims.

### [Industrial Applicability]

The information notification system and the like according to the present disclosure are applicable to, for example, an IoT system or the like using, for example, home appliances located in a house.

### [Reference Signs List]

1, 101, 201, 201a, 301, 401 information notification system
10 first device
11 generator
12, 22, 122, 422 controller
14, 24, 124, 424 interface
16, 26, 126, 426 sensor unit
18, 28, 128, 428 communicator
20, 120, 420 second device
30b, 30c, 30d, 230b apparatus
50a, 50b sensor
60, 160, 260, 360, 460 first server
61 information acquirer
62 discriminator
63 device information database
64 behavior extractor
65 behavior information database
66, 166, 266, 366, 466 presentation controller
70 second server
72 database
80 house
90 network

## Claims

1. An information notification system, comprising:
a plurality of apparatuses; and
at least one server,
wherein the plurality of apparatuses includes a first device,
each of at least one of the plurality of apparatuses includes a sensor unit that discriminates between at least one person and generates a presence-absence signal including presence-absence information about each of the at least one person,
the at least one server includes a first server,
the first device includes:
a generator that generates a notification signal that includes notification information that is to be provided to a user who uses the first device and user information for use in identifying the user, and
the first server includes:
an information acquirer that acquires the user information and the notification information, included in the notification signal, and the presence-absence information included in the presence-absence signal;
a behavior extractor (64) that extracts behavior information about each user;
a behavior information database (65) that accumulates behavior information about each user, extracted by the behavior extractor (64); and
a presentation controller that determines a presumed position and a presumed behavior and causes a second device to present the notification information based on the behavior information accumulated in behavior information database (65), the presumed position being a position of the user presumed based on the user information and the presence-absence information, the second device being one of one or more apparatuses that are capable of presenting the notification information to the user who is in the presumed position among the plurality of apparatuses;
wherein the presentation controller determines a predetermined position as a standby target position and a predetermined behavior as a standby target behavior, and
when the presumed position matches the standby target position, the presentation controller does not cause the second device to present the notification information, and when the presumed position is a position other than the standby target position, the presentation controller causes the second device to present the notification information, and
when the presumed behavior matches the standby target behavior, the presentation controller does not cause the second device to present the notification information, and when the presumed behavior is a behavior other than the standby target behavior, the presentation controller causes the second device to present the notification information.

2. The information notification system according to claim 1,
wherein the at least one server further includes a second server, and
the presentation controller of the first server causes the second device to present the notification information via the second server.

3. The information notification system according to any one of claims 1 or 2,
wherein the presence-absence information includes operation information that is information about operations of the plurality of apparatuses, and
the presentation controller selects, in accordance with the user information and the operation information, the second device from among the one or more apparatuses that are capable of presenting the notification information to the user who is in the presumed position among the plurality of apparatuses.

4. The information notification system according to any one of claims 1 or 2,
wherein the plurality of apparatuses further include a mobile apparatus,
the presence-absence information includes position information indicating a position of the mobile apparatus, and
the presentation controller determines the presumed position in accordance with the position information.

5. The information notification system according to any one of claims 1 to 4,
wherein the presentation controller changes a form of presentation in accordance with presentation setting information that is information about the user.

6. The information notification system according to claim 5,
wherein the presentation setting information includes at least one of the user information or the presence-absence information.

7. The information notification system according to claim 5 or 6,
wherein the second device includes a display that displays a notification image corresponding to the notification information.

8. The information notification system according to claim 7,
wherein the presentation setting information includes a distance from the presumed position to the second device, and
when the distance from the presumed position to the second device is less than a predetermined threshold value, the presentation controller increases an amount of information to be displayed in the notification image from an amount of information to be displayed when the distance is greater than or equal to the predetermined threshold value.

9. The information notification system according to any one of claims 5 to 7,
the presentation setting information includes the user information, and
the presentation controller changes the form of presentation in accordance with the user.

10. An information notification method for use in an information notification system including a plurality of apparatuses, the plurality of apparatuses including a first device,
the information notification method, comprising:
generating a notification signal that includes notification information that is to be provided to a user who uses the first device, and user information for use in identifying the user;
causing each of at least one of the plurality of apparatuses to discriminate between at least one person and generate a presence-absence signal including presence-absence information about each of the at least one person;
acquiring the user information and the notification information included in the notification signal and the presence-absence information included in the presence-absence signal;
extracting behavior information about each user;
accumulating the extracted behavior information about each user; and
determining a presumed position and a presumed behavior and causing a second device to present the notification information based on the accumulated behavior information, the presumed position being a position of the user presumed based on the user information and the presence-absence information, and the second device being one of apparatuses that are capable of presenting the notification information to the user who is in the presumed position among the plurality of apparatuses,
determining a predetermined position as a standby target position and a predetermined behavior as a standby target behavior, and
when the presumed position matches the standby target position, not causing the second device to present the notification information, and when the presumed position is a position other than the standby target position, causing the second device to present the notification information, and
when the presumed behavior matches the standby target behavior, not causing the second device to present the notification information, and when the presumed behavior is a behavior other than the standby target behavior, causing the second device to present the notification information.

## Patentansprüche

1. System für Benachrichtigung über Informationen, das umfasst:
eine Vielzahl von Vorrichtungen; sowie
wenigstens einen Server,
wobei die Vielzahl von Vorrichtungen eine erste Einrichtung einschließt,
jede von wenigstens einer der Vielzahl von Vorrichtungen eine Sensor-Einheit enthält, die wenigstens eine Person erkennt und ein Anwesenheits-Abwesenheits-Signal generiert, das Anwesenheits-Abwesenheits-Informationen hinsichtlich der wenigstens einen Person enthält,
der wenigstens eine Server einen ersten Server einschließt,
die erste Einrichtung enthält:
einen Generator, der ein Benachrichtigungs-Signal generiert, das Benachrichtigungs-Informationen, die einem Benutzer bereitgestellt werden, der die erste Einrichtung verwendet, sowie Benutzer-Informationen zur Verwendung bei Identifizierung des Benutzers enthält, und
der erste Server enthält:
eine Informations-Erfassungseinrichtung, die die Benutzer-Informationen und die Benachrichtigungs-Informationen, die in dem Benachrichtigungs-Signal enthalten sind, sowie die Anwesenheits-Abwesenheits-Informationen erfasst, die in dem Anwesenheits-Abwesenheits-Signal enthalten sind;
eine Verhaltens-Extraktionseinrichtung (64), die Verhaltens-Informationen über jeden Benutzer extrahiert;
eine Datenbank (65) für Verhaltens-Informationen, die von der Verhaltens-Extraktionseinrichtung (64) extrahierte Verhaltens-Informationen über jeden Benutzer sammelt; sowie
eine Darstellungs-Steuerungseinrichtung, die eine vermutete Position und ein vermutetes Verhalten bestimmt und eine zweite Einrichtung veranlasst, die Benachrichtigungs-Informationen auf Basis der in der Datenbank (65) für Verhaltens-Informationen gesammelten Verhaltens-Informationen darzustellen, wobei die vermutete Position eine Position des Benutzers ist, die auf Basis der Benutzer-Informationen sowie der Anwesenheits-Abwesenheits-Informationen vermutet wird, und die zweite Einrichtung von der Vielzahl von Vorrichtungen eine von der einen oder den mehreren Vorrichtung/en ist, die in der Lage ist/sind, die Benachrichtigungs-Informationen für den Benutzer darzustellen, der sich an der vermuteten Position befindet;
wobei die Darstellungs-Steuerungseinrichtung eine vorgegebene Position als eine Bereitschafts-Zielposition und ein vorgegebenes Verhalten als ein Bereitschafts-Zielverhalten bestimmt, und
die Darstellungs-Steuerungseinrichtung, wenn die vermutete Position mit der Bereitschafts-Zielposition übereinstimmt, die zweite Einrichtung nicht veranlasst, die Benachrichtigungs-Informationen darzustellen, und die Darstellungs-Steuerungseinrichtung, wenn die vermutete Position eine andere Position als die Bereitschafts-Zielposition ist, die zweite Einrichtung veranlasst, die Benachrichtigungs-Informationen darzustellen, und
die Darstellungs-Steuerungseinrichtung, wenn das vermutete Verhalten mit den Bereitschafts-Zielverhalten übereinstimmt, die zweite Einrichtung nicht veranlasst, die Benachrichtigungs-Informationen darzustellen, und die Darstellungs-Steuerungseinrichtung, wenn das vermutete Verhalten ein anderes Verhalten als das Bereitschafts-Zielverhalten ist, die zweite Einrichtung veranlasst, die Benachrichtigungs-Informationen darzustellen.

2. System für Benachrichtigung über Informationen nach Anspruch 1,
wobei der wenigstens eine Server des Weiteren einen zweiten Server einschließt, und die Darstellungs-Steuerungseinrichtung des ersten Servers die zweite Einrichtung veranlasst, die Benachrichtigungs-Informationen über den zweiten Server darzustellen.

3. System für Benachrichtigung über Informationen nach einem der Ansprüche 1 oder 2, wobei die Anwesenheits-Abwesenheits-Informationen Funktions-Informationen einschließen, die Informationen über Funktionen der Vielzahl von Vorrichtungen sind, und die Darstellungs-Steuerungseinrichtung entsprechend den Benutzer-Informationen und den Funktions-Informationen von der Vielzahl von Vorrichtungen die zweite Einrichtung aus der einen oder den mehreren Vorrichtung/en auswählt, die in der Lage ist/sind, dem Benutzer, der sich an der vermuteten Position befindet, die Benachrichtigungs-Informationen darzustellen.

4. System für Benachrichtigung über Informationen nach einem der Ansprüche 1 oder 2, wobei die Vielzahl der Vorrichtungen des Weiteren eine mobile Vorrichtung einschließt,
die Anwesenheits-Abwesenheits-Informationen Positions-Informationen einschließen, die eine Position der mobilen Vorrichtung angeben, und
die Darstellungs-Steuerungseinrichtung die vermutete Position entsprechend den Positions-Informationen bestimmt.

5. System für Benachrichtigung über Informationen nach einem der Ansprüche 1 bis 4,
wobei die Darstellungs-Steuerungseinrichtung eine Form der Darstellung entsprechend Einstellungs-Informationen für die Darstellung ändert, die Informationen über den Benutzer sind.

6. System für Benachrichtigung über Informationen nach Anspruch 5,
wobei die Einstellungs-Informationen für die Darstellung die Benutzer-Informationen oder/und die Anwesenheits-Abwesenheits-Informationen einschließen.

7. System für Benachrichtigung über Informationen nach Anspruch 5 oder 6,
wobei die zweite Einrichtung eine Anzeige enthält, die ein den Benachrichtigungs-Informationen entsprechendes Benachrichtigungs-Bild anzeigt.

8. System für Benachrichtigung über Informationen nach Anspruch 7,
wobei die Einstellungs-Informationen für die Darstellung einen Abstand von der vermuteten Position zu der zweiten Einrichtung einschließen, und
die Darstellungs-Steuerungseinrichtung, wenn der Abstand von der vermuteten Position zu der zweiten Einrichtung unter einem vorgegebenen Schwellenwert liegt, einen in dem Benachrichtigungs-Bild anzuzeigenden Betrag an Informationen gegenüber einem Betrag an Informationen vergrößert, der anzuzeigen ist, wenn der Abstand über oder auf dem vorgegebenen Schwellenwert liegt.

9. System für Benachrichtigung über Informationen nach einem der Ansprüche 5 bis 7,
wobei die Einstellungs-Informationen für die Darstellung die Benutzer-Informationen einschließen, und
die Darstellungs-Steuerungseinrichtung die Form der Darstellung entsprechend dem Benutzer ändert.

10. Verfahren für Benachrichtigung über Informationen für Einsatz in einem System für Benachrichtigung über Informationen, das eine Vielzahl von Vorrichtungen einschließt, wobei die Vielzahl von Vorrichtungen eine erste Einrichtung einschließen,
wobei das Verfahren für Benachrichtigung über Informationen umfasst:
Generieren eines Benachrichtigungs-Signals, das Benachrichtigungs-Informationen, die einem Benutzer bereitgestellt werden, der die erste Einrichtung verwendet, sowie Benutzer-Informationen zur Verwendung bei Identifizierung des Benutzers enthält;
Veranlassen, dass jede von wenigstens einer der Vielzahl von Vorrichtungen wenigstens eine Person erkennt und ein Anwesenheits-Abwesenheits-Signal generiert, das Anwesenheits-Abwesenheits-Informationen hinsichtlich der wenigstens einen Person enthält;
Erfassen der Benutzer-Informationen und der Benachrichtigungs-Informationen, die in dem Benachrichtigungs-Signal enthalten sind, sowie der Anwesenheits-Abwesenheits-Informationen, die in dem Anwesenheits-Abwesenheits-Signal enthalten sind;
Extrahieren von Verhaltens-Informationen über jeden Benutzer;
Sammeln der extrahierten Verhaltens-Informationen über jeden Benutzer; und
Bestimmen einer vermuteten Position sowie eines vermuteten Verhaltens und Veranlassen, dass eine zweite Einrichtung die Benachrichtigungs-Informationen auf Basis der gesammelten Verhaltens-Informationen darstellt, wobei die vermutete Position eine Position des Benutzers ist, die auf Basis der Benutzer-Informationen sowie der Anwesenheits-Abwesenheits-Informationen vermutet wird, und die zweite Einrichtung von der Vielzahl von Vorrichtungen eine von der einen oder den mehreren Vorrichtung/en ist, die in der Lage ist/sind, die Benachrichtigungs-Informationen für den Benutzer darzustellen, der sich an der vermuteten Position befindet,
Bestimmen einer vorgegebenen Position als eine Bereitschafts-Zielposition sowie eines vorgegebenen Verhaltens als ein Bereitschafts-Zielverhalten, und
Unterlassen, dass die zweite Einrichtung veranlasst wird, die Benachrichtigungs-Informationen darzustellen, wenn die vermutete Position mit der Bereitschafts-Zielposition übereinstimmt, und Veranlassen, dass die zweite Einrichtung die Benachrichtigungs-Informationen darstellt, wenn die vermutete Position eine andere Position ist als die Bereitschafts-Zielposition, sowie
Unterlassen, dass die zweite Einrichtung veranlasst wird, die Benachrichtigungs-Informationen darzustellen, wenn das vermutete Verhalten mit dem Bereitschafts-Zielverhalten übereinstimmt, und Veranlassen, dass die zweite Einrichtung die Benachrichtigungs-Informationen darstellt, wenn das vermutete Verhalten ein anderes Verhalten ist als das Bereitschafts-Zielverhalten.

## Revendications

1. Système de notification d'information, comprenant :
une pluralité d'appareils ; et
au moins un serveur,
dans lequel
la pluralité d'appareils comprend un premier dispositif,
chaque au moins un appareil de la pluralité d'appareils comprend une unité de capteur qui fait la distinction entre au moins une personne et génère un signal de présence-absence comprenant de l'information de présence-absence concernant chacune desdites au moins une personne,
ledit au moins un serveur comprend un premier serveur,
le premier dispositif comprend :
un générateur qui génère un signal de notification comprenant de l'information de notification qui doit être pourvue à un utilisateur qui utilise le premier dispositif et de l'information d'utilisateur destinée à être utilisée pour identifier l'utilisateur, et
le premier serveur comprend :
un acquéreur d'information qui acquiert l'information d'utilisateur et l'information de notification incluse dans le signal de notification ainsi que l'information de présence-absence incluse dans le signal de présence-absence ;
un extracteur de comportement (64) qui extrait de l'information de comportement concernant chaque utilisateur ;
une base de données d'information de comportement (65) qui accumule de l'information de comportement concernant chaque utilisateur, extraite par l'extracteur de comportement (64) ; et
un contrôleur de présentation qui détermine une position présumée et un comportement présumé, et commande à un deuxième dispositif de présenter l'information de notification sur la base de l'information de comportement accumulée dans la base de données d'information de comportement (65), la position présumée étant une position présumée de l'utilisateur sur la base de l'information d'utilisateur et de l'information de présence-absence, le deuxième dispositif étant un appareil parmi un ou plusieurs appareils capables de présenter l'information de notification à l'utilisateur qui se trouve à la position présumée parmi la pluralité d'appareils ;
dans lequel
le contrôleur de présentation détermine une position prédéterminée comme position cible d'attente et un comportement prédéterminé comme comportement cible d'attente, et
quand la position présumée correspond à la position cible d'attente, le contrôleur de présentation ne commande pas au deuxième dispositif de présenter l'information de notification, et quand la position présumée est une position autre que la position cible d'attente, le contrôleur de présentation commande au deuxième dispositif de présenter l'information de notification, et
quand le comportement présumé correspond au comportement cible d'attente, le contrôleur de présentation ne commande pas au deuxième dispositif de présenter l'information de notification, et quand le comportement présumé est un comportement autre que le comportement cible d'attente, le contrôleur de présentation commande au deuxième dispositif de présenter l'information de notification.

2. Système de notification d'information selon la revendication 1, dans lequel
ledit au moins un serveur comprend en outre un deuxième serveur, et
le contrôleur de présentation du premier serveur commande au deuxième dispositif de présenter l'information de notification via le deuxième serveur.

3. Système de notification d'information selon l'une quelconque des revendications 1 et 2, dans lequel
l'information de présence-absence comprend de l'information opérationnelle qui est de l'information concernant les opérations de la pluralité d'appareils, et
le contrôleur de présentation sélectionne, conformément à l'information d'utilisateur et à l'information opérationnelle, le deuxième dispositif parmi lesdits un ou plusieurs appareils qui sont capables de présenter l'information de notification à l'utilisateur qui se trouve dans la position présumée parmi la pluralité d'appareils.

4. Système de notification d'information selon l'une quelconque des revendications 1 et 2, dans lequel
la pluralité d'appareils comprend en outre un appareil mobile,
l'information de présence-absence comprend de l'information de position indiquant une position de l'appareil mobile, et
le contrôleur de présentation détermine la position présumée conformément à l'information de position.

5. Système de notification d'information selon l'une quelconque des revendications 1 à 4, dans lequel
le contrôleur de présentation change une forme de présentation conformément à l'information de configuration de présentation, qui est de l'information concernant l'utilisateur.

6. Système de notification d'information selon la revendication 5, dans lequel
l'information de configuration de présentation comprend au moins une information parmi l'information d'utilisateur ou l'information de présence-absence.

7. Système de notification d'information selon la revendication 5 ou 6, dans lequel
le deuxième dispositif comprend un affichage qui affiche une image de notification correspondant à l'information de notification.

8. Système de notification d'information selon la revendication 7, dans lequel
l'information de configuration de présentation inclut une distance entre la position présumée et le deuxième dispositif, et
quand la distance entre la position présumée et le deuxième dispositif est inférieure à une valeur seuil prédéterminée, le contrôleur de présentation augmente la quantité d'information à afficher dans l'image de notification à partir d'une quantité d'information à afficher quand la distance est supérieure ou égale à la valeur seuil prédéterminée.

9. Système de notification d'information selon l'une quelconque des revendications 5 à 7, dans lequel
l'information de configuration de présentation comprend l'information d'utilisateur, et
le contrôleur de présentation change la forme de présentation en fonction de l'utilisateur.

10. Procédé de notification d'information destiné à être utilisé dans un système de notification d'information comprenant une pluralité d'appareils,
la pluralité d'appareils comprenant un premier dispositif,
le procédé de notification d'information comprenant :
la génération d'un signal de notification qui comprend de l'information de notification qui doit être pourvue à un utilisateur qui utilise le premier dispositif, et de l'information d'utilisateur destinée à être utilisée pour identifier l'utilisateur ;
la commande à chaque au moins un appareil de la pluralité d'appareils de faire une distinction entre au moins une personne et de générer un signal de présence-absence comprenant de l'information de présence-absence concernant chaque dite au moins une personne ;
l'acquisition de l'information d'utilisateur et de l'information de notification incluse dans le signal de notification, et de l'information de présence-absence incluse dans le signal de présence-absence ;
l'extraction d'information de comportement concernant chaque utilisateur ;
l'accumulation de l'information de comportement extraite concernant chaque utilisateur ; et
la détermination d'une position présumée et d'un comportement présumé, et la commande à un deuxième dispositif de présenter l'information de notification sur la base de l'information de comportement accumulée, la position présumée étant une position présumée de l'utilisateur sur la base de l'information d'utilisateur et de l'information de présence-absence, et le deuxième dispositif étant l'un des appareils capables de présenter l'information de notification à l'utilisateur qui se trouve dans la position présumée parmi la pluralité d'appareils,
la détermination d'une position prédéterminée comme position cible d'attente et d'un comportement prédéterminé comme comportement cible d'attente, et
quand la position présumée correspond à la position cible d'attente, la non-commande au deuxième dispositif de présenter l'information de notification, et quand la position présumée est une position autre que la position cible d'attente, la commande au deuxième dispositif de présenter l'information de notification, et
quand le comportement présumé correspond au comportement cible d'attente, la non-commande au deuxième dispositif de présenter l'information de notification, et quand le comportement présumé est un comportement autre que le comportement cible d'attente, la commande au deuxième dispositif de présenter l'information de notification.
